# EUROPÄISCHE PATENTSCHRIFT

(11) **EP 2 404 338 B1**
(45) Veröffentlichungstag und Bekanntmachung des Hinweises auf die Patenterteilung: **16.09.2015**
(21) Anmeldenummer: 10706161.6
(22) Anmeldetag: 26.02.2010
(51) Int. Cl.: H01M 2/02, H01M 2/10, H01M 2/20, H01M 2/30, H01M 10/052

(54) **ELEKTROENERGIE-SPEICHERZELLE UND ZELLBLOCK, ELEKTROENERGIE-SPEICHERVORRICHTUNG UND FAHRZEUG DAMIT**
ELECTRICAL ENERGY STORAGE CELL AND CELL BLOCK, ELECTRICAL ENERGY STORAGE DEVICE AND THE VEHICLE COMPRISING THE SAME
CELLULE D'ACCUMULATION D'ÉNERGIE ÉLECTRIQUE ET BLOC DE CELLULES, DISPOSITIF DE STOCKAGE D'ÉNERGIE ÉLECTRIQUE ET VÉHICULE COMPRENANT LE MÊME

(30) Priorität: 03.03.2009 DE 102009011524
(43) Veröffentlichungstag der Anmeldung: 11.01.2012
(73) Patentinhaber: Li-Tec Battery GmbH, 01917 Kamenz (DE)
(72) Erfinder: MIKUS, Holger, 01917 Kamenz (DE); FUCHS, Andreas, 04229 Leipzig (DE); HOHENTHANNER, Claus-Rupert, 63457 Hanau (DE); SCHMIDT, Torsten, 06188 Landsberg (DE); POLYAKOV, Mykola, 18146 Rostock (DE); EICHINGER, Günter, 63674 Altenstadt (DE); SCHNEIDER, Martin, 02633 Göda (DE)
(74) Vertreter: JENSEN & SON
(86) Internationale Anmeldenummer: PCT/EP2010/001218
(87) Internationale Veröffentlichungsnummer: WO 2010/099906

(56) Entgegenhaltungen:
- WO-A1-01/37353
- WO-A1-2008/142924
- WO-A1-2009/103523
- JP-A- 2000 048 773
- JP-A- 2006 066 322
- JP-A- 2007 250 330
- US-A1- 2006 234 119
- US-A1- 2006 286 450

## Beschreibung

Die vorliegende Erfindung betrifft eine Elektroenergie-Speicherzelle und einen Zellblock, bestehend aus einer Mehrzahl von miteinander verschalteten Elektroenergie-Speicherzellen, eine Elektroenergie-Speichervorrichtung mit einem Zellblock sowie ein damit ausgestattetes Fahrzeug.

Es sind Batterien (Primärspeicher) und Akkumulatoren (Sekundärspeicher) zur Speicherung elektrischer Energie bekannt, die aus einer oder mehreren Speicherzellen aufgebaut sind, in denen bei Anlegen eines Ladestroms elektrische Energie in einer elektrochemischen Ladereaktion zwischen einer Kathode und einer Anode in bzw. zwischen einem Elektrolyten in chemische Energie umgewandelt und somit gespeichert wird und in denen bei Anlegen eines elektrischen Verbrauchers chemische Energie in einer elektrochemischen Entladereaktion in elektrische Energie umwandelt wird. Dabei werden Primärspeicher in der Regel nur ein Mal aufgeladen und sind nach Entladung zu entsorgen, während Sekundärspeicher mehrere (von einigen 100 bis über 10000) Zyklen von Aufladung und Entladung erlauben. Es ist dabei anzumerken, dass auch Akkumulatoren bisweilen als Batterien bezeichnet werden, wie etwa Fahrzeugbatterien, die bekanntlich häufige Ladezyklen erleben.

In den letzten Jahren gewinnen Primär- und Sekundärspeicher auf der Basis von Lithiumverbindungen an Bedeutung. Diese weisen eine hohe Energiedichte und thermische Stabilität auf, liefern eine konstante Spannung bei geringer Selbstentladung und sind frei von dem sogenannten Memory-Effekt.

Es ist bekannt, Energiespeicher und insbesondere Lithium-Batterien und -Akkumulatoren in der Form dünner Platten herzustellen. Das Skript "Primäre und wiederaufladbare Lithium-Batterien" zum Praktikum Anorganisch-Chemische Technologie der TU Graz von Dr. K.-C. Möller und Dr. M. Winter vom Februar 2005 zeigt z.B. Lithium-Ionen-Polymerzellen im Format einer Scheckkarte oder gar einer SmartCard. Zum Funktionsprinzip einer Lithium-Ionen-Zelle wird beispielhaft auf dieses Skript verwiesen. Bei solchen Zellen werden Kathoden- und Anodenmaterial, Stromsammler und Separatoren in Form dünner Folien auf geeignete Weise aufeinandergelegt (gestapelt) und in eine Hüllfolie aus einem Verbundmaterial verpackt, wobei Stromableiter, die mit den Stromsammlerfolien der Kathode bzw. der Anode verbunden sind, an einer Kante der Zelle seitlich hervorragen.

Durch Änderung der Anzahl der Anoden- und Kathodenpaare kann die Kapazität einer solchen Zelle nach Bedarf eingestellt werden, wie etwa aus der EP 1 475 852 A1 bekannt. Dort werden die Enden der Stromsammelfolien innerhalb der Hüllfolie zusammengefasst und durch Verbindungsmittel wie etwa Nieten, die senkrecht durch die Hüllfolie hindurch verlaufen, mit einem außen auf der Hüllfolie aufliegenden, stabförmigen Stromableiter verbunden. Die außen liegenden Stromableiter ragen dann wiederum an einer Kante der Flachzelle ab.

In der EP 1 562 242 A2 ist auch ein von den Enden der Stromsammelfolien getrennter, stabförmiger Stromableiter vorgesehen, der aber bereits innerhalb der Hüllfolie mit den Enden der Stromsammelfolien verbunden und wieder durch die Schweißnaht der Hüllfolie hindurch nach außen geführt wird. Die stabförmigen Stromableiter ragen dabei wahlweise an einer Kante oder aber an einander gegenüberliegenden Kanten von der Flachzelle ab.

Werden mehrere Flachzellen zu einem Zellpaket gestapelt, wie es etwa bei Automobilbatterien aufgrund angestrebter höherer Spannungen und Kapazitäten regelmäßig erforderlich ist, so erfolgt die Verschaltung der Einzelzellen üblicherweise an der Oberseite, wie es beispielhaft in der WO 2008/128764 A1 oder der JP 07-282841 A beschrieben ist. Fig. 14 zeigt eine Anordnung mehrerer flacher, quader- oder plattenförmiger Einzelzellen 102 nach der WO 2008/128764 A1 in einem Zellstapel 101. Von Anode A und Kathode K einer Zelle 102 ragt an gegenüberliegenden lateralen Seiten jeweils eine Kontaktfahne 103.A, 103.K an derselben Flachseite von derselben, oberen Kante (Schmalseite) der Zelle nach oben ab. Dabei ist die Kathodenkontaktfahne 103.K jeder Zelle 102 gerade, während die Anodenkontaktfahne 103.A jeder Zelle 102 gebogen ist, und zwar um etwa (wohl etwas mehr als) die Dicke jeder Zelle 102. In dem Zellstapel 101 folgt jeweils eine Zelle 102, bei welcher die Anode A rechts und die Kathode K links angeordnet ist, auf eine Zelle 102, bei welcher die Anode A links und die Kathode K rechts angeordnet ist. Auf diese Weise kommen ohne weiteres Zutun jeweils eine (gebogene) Anodenkontaktfahne 103.A mit einer (geraden) Kathodenkontaktfahne 103.K in Kontakt oder zumindest in deren Nähe, sodass sie miteinander verbunden werden können. Auf diese Weise wird eine Reihenschaltung verwirklicht. Die Zellen 102 sind mit einem Abstand voneinander angeordnet und kraft- oder formschlüssig auf einer Grundplatte 105 befestigt.

Die Anordnung und Befestigung auf der Grundplatte 105 erfordert sorgfältige Ausrichtung und zuverlässige Fixierung. Eine Demontage der Zellen erfordert einzelnes Lösen der einzelnen Zellen 102. Es ist nur eine Festlegung der Zellen im unteren Bereich vorgesehen, sodass bei Einwirkung von Beschleunigungen oder Vibrationen die Verbindungsstellen, die zwischen Kontaktfahnen im oberen Bereich aufgrund der Trägheit und Elastizität der Zellen 102 gebildet sind, mechanischen Belastungen ausgesetzt sein können, was sich bei nur geringfügig lockerer Fixierung an der Grundplatte 105 verschärft. Die Kontaktfläche der Kontaktfahnen 103.A, 103.K ist verhältnismäßig klein.

Aus einer noch unveröffentlichten Entwicklung ist es bekannt, mehrere dünne, quaderförmige galvanische Zellen so zu einem oder mehreren Stapeln zusammenzufassen, dass ihre Seiten größter Ausdehnung einander zugewandt sind oder berühren, und so in einer Halteeinrichtung eingegossen sind. Eine solche Anordnung ist nicht mehr demontierbar.

Die JP 2006 066322 A offenbart eine verbesserte Anordnung elektrochemischer Zellen (Battery Pack) mit wie Arten von Zellen. Diese Zellen werden durch Siegelung einer plattenförmigen Elektrodenanordnung in einen Laminatfilm aufgebaut.

Die JP 2007 250330 A offenbart ein Batteriemodul mit einer Mehrzahl flacher Batterien, die gestapelt sind, wobei jede Batterie durch Siegelung eines Energiespeichers mit einem bewehrten Material gebildet ist.

Die US 2006/234119 A1 offenbart eine gerahmte Lithium-Zellen-Batterie mit einem ersten und einem zweiten Rahmenbauteil, die miteinander verschlossen sind, wobei der Siegelrand der Lithium-Zellen-Batterie eingeklemmt wird.

Es ist den Erfindern auch eine druckschriftlich nicht näher belegte Anordnung bekannt, bei der mehrere flache Zellen zwischen zwei Endplatten gestapelt sind, wobei der Stapel durch Zugstäbe (Schraubbolzen), die sich zwischen den Endplatten erstrecken, zusammengehalten werden. Hierbei wird nicht unerheblicher Druck auf den im inneren Bereich liegenden aktiven Teil der Speicherzellen ausgeübt.

Es ist daher eine Aufgabe der vorliegenden Erfindung, eine flache Elektroenergie-Speicherzelle und einen aus mehreren solchen Zellen bestehenden Zellblock zu schaffen, die eine Alternative zu bekannten Bauformen anbieten und insbesondere die Nachteile dieser Bauformen vermeiden.

Es ist insbesondere Aufgabe der Erfindung, eine flache Elektroenergie-Speicherzelle so auszubilden, dass bei Bildung eines Blocks eine sichere Lagefixierung der Zellen untereinander möglich ist.

Es ist eine weitere Aufgabe der Erfindung, eine flache Elektroenergie-Speicherzelle so auszubilden, dass ein aus diesen gebildeter Block möglichst kompakt ist, ohne dass die aktiven Bereiche einer Druckbeanspruchung ausgesetzt sind.

Die Aufgabe wird durch die Merkmale der unabhängigen Ansprüche gelöst. Vorteilhafte Weiterbildungen der Erfindung bilden den Gegenstand der Unteransprüche.

Eine Elektroenergiespeicherzelle der vorliegenden Erfindung weist einen aktiven Teil, der eingerichtet und angepasst ist, von außen zugeführte elektrische Energie zu speichern und gespeicherte elektrische Energie nach außen abzugeben; wenigstens zwei Stromableiter, die mit dem aktiven Teil verbunden sind und zur Zuführung elektrischen Stroms von außen an den aktiven Teil und zur Abgabe von dem aktiven Teil abgegebenen elektrischen Stroms nach außen eingerichtet und angepasst sind; und eine Umhüllung, welche eine prismatische Grundform von im Wesentlichen quaderförmigen Umriss beschreibt und den aktiven Teil gas- und flüssigkeitsdicht umhüllt, auf. Die Umhüllung weist zwei flächige Folienteile und einen umlaufenden, die Ränder der Folienteile verbindenden Nahtteil auf, wobei der Nahtteil den aktiven Teil rahmenartig umgibt und Abschnitte größter Dicke aufweist, in welchen die Dicke auch unter mechanischem Druck gleichmäßig größer als die Dicke des aktiven Teils ist.

Ein solcher Aufbau ermöglicht es, Elektroenergie-Speicherzellen (nachstehend kurz "Zellen") so zu stapeln, dass sie an den Abschnitten größter Dicke des Nahtteils aneinander anliegen, ohne dass eine mechanische Einwirkung auf den aktiven Teil ausgeübt wird. Bei geeigneter Materialauswahl für die Folienteile und den Nahtteil sowie des Verbindungsverfahrens zwischen den Folienteilen und dem Nahtteil ist es auch möglich, den aktiven Teil gegen die Einwirkung elektromagnetischer Felder abzuschirmen und die Umhüllung resistent gegenüber in dem aktiven Teil vorhandenen und/oder erzeugten Substanzen auszuführen.

Erfindungsgemäß liegen die zwei Folienteile wenigstens in den Abschnitten größter Dicke auf gegenüberliegenden Flachseiten des Nahtteils flächig auf und sind mit diesen dicht verbunden. Auf diese Weise ist es gewährleistet, dass die Folienteile in zwei parallelen Ebenen aufgespannt sind und damit Flachseiten der prismatischen Grundform bilden.

Bei einem aus solchen Zellen ausgebildeten Zellblock sind die Zellen in Richtung ihrer Dicke gestapelt und liegen vorzugsweise wenigstens in Bereichen, die den Bereichen größter Dicke des Nahtteils entsprechen, aufeinander auf. Dabei sind die Zellen in Stapelrichtung vorzugsweise auf Druck miteinander verspannt. Es ist so eine kompakte und sichere Anordnung und Montage der Einzelzellen möglich, ohne dass Druck auf den aktiven Teil der jeweiligen Zelle ausgeübt wird.

Erfindungsgemäß weist der Nahtteil in Dickenrichtung verlaufende Durchgangsbohrungen in Abschnitten größter Dicke auf und weisen die Folienteile mit den Durchgangsbohrungen fluchtende Löcher auf. In einem aus solchen Zellen aufgebauten Zellblock kann die Verspannung der Zellen mittels Zugstäben erfolgen, die sich durch die Durchgangslöcher aller Zellen hindurch erstrecken. Auf diese Weise wird ein besonders einfacher und kompakter Aufbau des Zellblocks ermöglicht, da das Volumen der Zellen für die Verspannung genutzt wird. Die Zellen sind untereinander wenigstens durch Reibung lagestabil fixiert. Über die Zugstäbe kann in Verbindung mit den Durchgangslöchern eine Zentrierung der Zellen senkrecht zur Stapelrichtung erfolgen, bereits bevor die Zellen miteinander verspannt werden. Dies erleichtert die Montage und verhindert Verspannungen beim Zusammenbau.

Besonders bevorzugt sind Hülsen vorgesehen, die sich über einen Teil der Länge der Durchgangsbohrungen jeweils in diesen erstrecken und von einer Seite des Nahtteils hervorragen, wobei vorzugsweise der Überstand der Hülsen und die in den Durchgangsbohrungen freigelassene Länge größer als die zusammen genommene Dicke der Folien und geringer als die Hälfte der größten Dicke des Nahtteils zzgl. der Dicke einer der Folien sind. Beim Zusammenbau solcher Zellen zu einem Zellblock erstreckt sich jeweils der von einer Zelle hervorragende Teil einer Hülse in den frei gelassenen Teil einer Durchgangsbohrung des Nahtteils einer benachbarten Zelle. Auf diese Weise wird eine Zentrierung der Zellen zueinander senkrecht zur Stapelrichtung bereits beim Zusammensetzen erreicht, bevor die Zugstäbe eingeführt und verspannt werden. Die Zugstäbe erstrecken sich dabei durch die Hülsen hindurch und erfahren so eine zuverlässig Führung.

Alternativ kann der Nahtteil in Dickenrichtung abragende Erhebungen aufweisen, wobei auf der jeweils gegenüberliegenden Seite einer Erhebung eine der Erhebung in Form und Größe entsprechende und mit dieser in Dickenrichtung fluchtende Einsenkung vorgesehen ist, und weisen die Folienteile mit den Erhebungen bzw. Einsenkungen fluchtende Löcher entsprechender Form und Ausdehnung auf, wobei vorzugsweise die Höhe der Erhebungen und die Tiefe der Einsenkungen größer als die zusammen genommene Dicke der Folien und geringer als die Hälfte der größten Dicke des Nahtteils zzgl. der Dicke einer der Folien sind. Beim Zusammenbau derartiger Zellen zu einem Zellblock erstreckt sich jeweils die eine Erhebung des Nahtteils einer Zelle in eine Einsenkung des Nahtteils einer benachbarten Zelle. Auf diese Weise wird beim Zusammensetzen der Zellen eine Zentrierung senkrecht zur Stapelrichtung erreicht.

Zusätzlich zu den Erhebungen und Einsenkungen kann der Nahtteil in Dickenrichtung verlaufende Durchgangsbohrungen in Abschnitten größter Dicke aufweisen und können die Folienteile mit den Durchgangsbohrungen fluchtende Löcher aufweisen, wobei die Durchgangsbohrungen vorzugsweise mittig fluchtend mit den Erhebungen bzw. Einsenkungen vorgesehen sind. Auf diese Weise kann eine Verspannung mehrerer Zellen zu einem Zellblock in oben erläuterter Weise zuverlässig, raumsparend und einfach bewerkstelligt werden, indem die Zugstäbe sich durch die Durchgangslöcher hindurch erstrecken.

Die Stromableiter der Zellen weisen bevorzugt ein flaches Profil auf und ragen von der Umhüllung weg. Mit flach profilierten, abragenden Stromableitern ist eine Durchkontaktierung der Zellen innerhalb eines Zellblocks besonders einfach in der Weise möglich, dass jeweils ein Stromableiter einer Zelle mit einem Stromableiter einer benachbarten Zelle verbunden ist und, soweit die Zelle nicht die erste oder letzte Zelle des Zellblocks ist, der andere Stromableiter der Zelle mit einem Stromableiter einer anderen benachbarten Zelle verbunden ist.

Wenn dabei stets Stromableiter unterschiedlicher Polarität miteinander verbunden sind, ist auf besonders einfache Weise eine Reihenschaltung der Zellen in dem Zellblock verwirklicht.

Die Stromableiter ragen vorzugsweise parallel zu den Flachseiten der von der Umhüllung definierten prismatischen Grundform ab und erstrecken sich besonders bevorzugt angrenzend an gegenüberliegende Flachseiten der von der Umhüllung definierten prismatischen Grundform. Werden solche Zellen in einem Zellblock zusammengefasst bzw. gestapelt, sind diese bevorzugt so angeordnet, dass sich stets Stromableiter an der Flachseite, an die sie angrenzen, in Stapelrichtung des Zellblocks gegenüberliegen. Dadurch liegen die zu verbindenden Stromableiter benachbarter Zellen einander stets mit geringstem axialen Abstand gegenüber und können auf einfache Weise durch Klammern oder andere geeignete Maßnahmen in Kontakt miteinander gebracht werden.

Dabei können die Stromableiter von gegenüberliegenden Schmalseiten der von der Umhüllung definierten prismatischen Grundform oder alternativ von der gleichen Schmalseite abragen. Ferner kann das prismatische Gebilde vier gleich lange Schmalseiten aufweisen, d.h. in einem Schnitt quer zur Stapelrichtung bzw. Eckenrichtung quadratisch ausgebildet sein, oder zwei gegenüberliegende Paare von Schmalseiten unterschiedlicher Länge aufweisen, wobei die Stromableiter von dem längeren Paar oder von dem kürzeren Paar der Schmalseiten abragen. Die letztendliche Wahl richtet sich nach den Einbaubedingungen; bevorzugt wird derzeit, dass die Stromableiter von gegenüberliegenden Schmalseiten der von der Umhüllung definierten prismatischen Grundform und von dem längeren Paar von Schmalseiten abragen.

Vorzugsweise ist die Ausdehnung des ersten und des zweiten Stromableiters entlang der Schmalseiten, von denen aus sie abragen, größer als die Hälfte der Länge dieser Schmalseiten. Auf diese Weise ist die Kontaktfläche zwischen Stromableitern besonders groß und damit der Übergangswiderstand vorteilhaft klein.

Besonders bevorzugt erstrecken sich die Stromableiter jeweils zwischen dem Nahtteil und einer der Folien hindurch und sind mit diesen dicht verbunden. Es können so innerhalb des aktiven Teils der Zelle angeordnete Elektroden innerhalb der Umhüllung mit dem Stromableiter verbunden werden und so Dichtungsprobleme mit durchkontaktierten, außenliegenden Stromableitern vermieden werden.

Besonders bevorzugt weisen die Stromableiter ein L-förmiges Profil auf, dessen einer Schenkel an eine Schmalseite des aktiven Teils anliegt und dessen anderer Schenkel sich zwischen dem Nahtteil und einer der Folien hindurch erstreckt. Durch das L-Profil wird die Schmalseite des aktiven Teils definiert und stabilisiert, und diese Schmalseite kann sich so ohne Auswirkungen auf den aktiven Teil an die Innenseite der Rahmenform des Nahtteils anlegen.

Wenn der Nahtteil zusätzlich in Form und Größe den Stromableitern angepasste Ausklinkungen aufweist, kann eine glatte Außenkontur der Flachseiten sichergestellt werden.

Die vorliegende Erfindung lässt sich besonders bevorzugt, aber nicht ausschließlich auf galvanische Zellen, insbesondere galvanische Sekundärzellen des flachen Typs anwenden, bei welchen der aktive Teil aus einem laminierten Folienpaket von chemisch aktiven Materialien zweier Arten, elektrisch leitenden Materialien und Trennschichten, ggf. mit einem Elektrolytmaterial getränkt, besteht. Das chemisch aktive Material der wenigstens einen Art weist vorzugsweise eine Lithiumverbindung auf, und das chemisch aktive Material der anderen Art weist vorzugsweise Graphit auf. Besonders bevorzugt ist der aktive Teil evakuiert, um unerwünschte Reaktionen zu vermeiden.

Wird ein freier Stromableiter der ersten Zelle in einem Zellblock mit einem Anschlusspol verbunden und ein freier Stromableiter der letzten Zelle in dem Zellblock mit einem anderen Anschlusspol verbunden, ist der Zellblock vorteilhaft als eine Elektroenergie-Speichervorrichtung nutzbar.

Besonders vorteilhaft wird eine solche Elektroenergie-Speichervorrichtung in einem Fahrzeug eingesetzt.

Die vorstehenden und weitere Merkmale, Aufgaben und Vorteile der vorliegenden Erfindung werden aus der nachstehenden Beschreibung deutlicher ersichtlich werden, die unter Bezugnahme auf die beigefügten Zeichnungen angefertigt wurde.

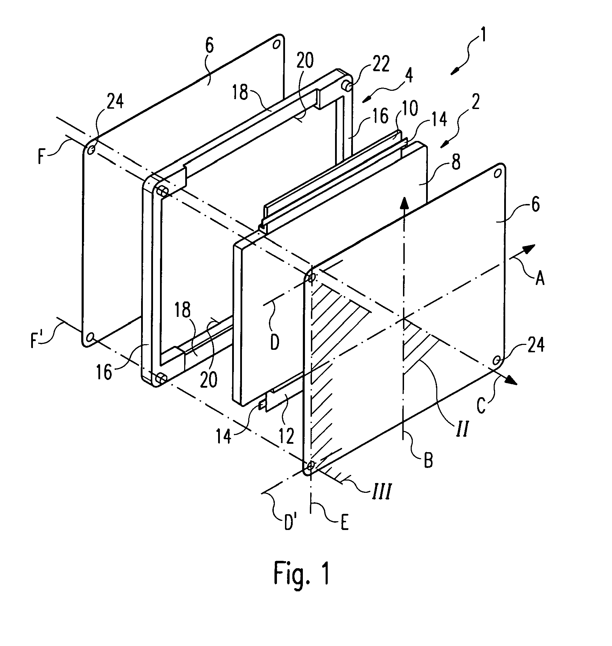

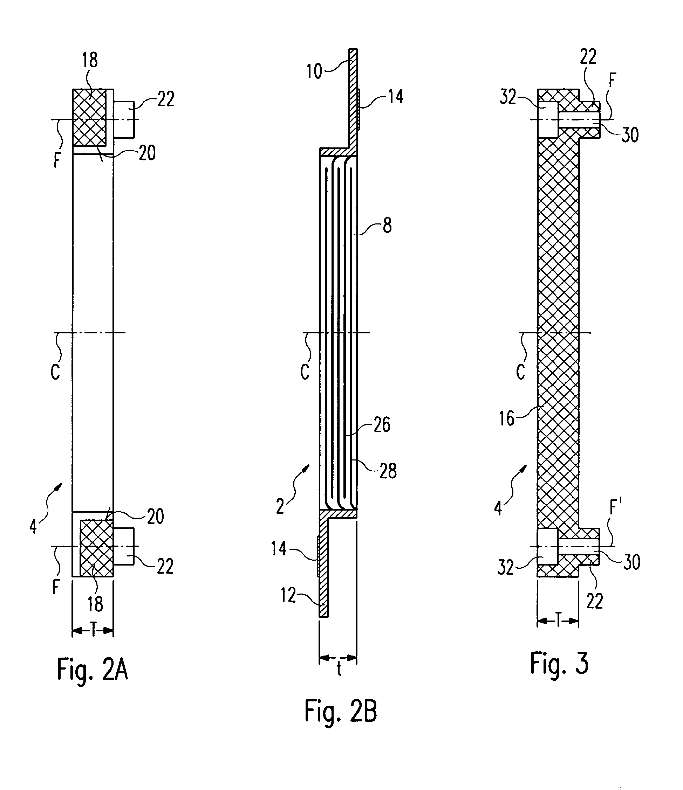

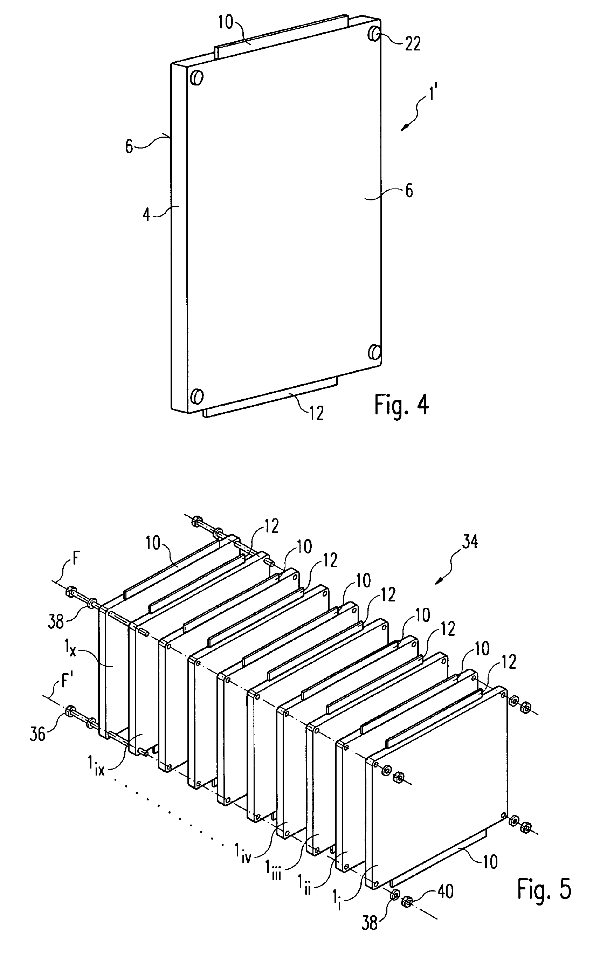

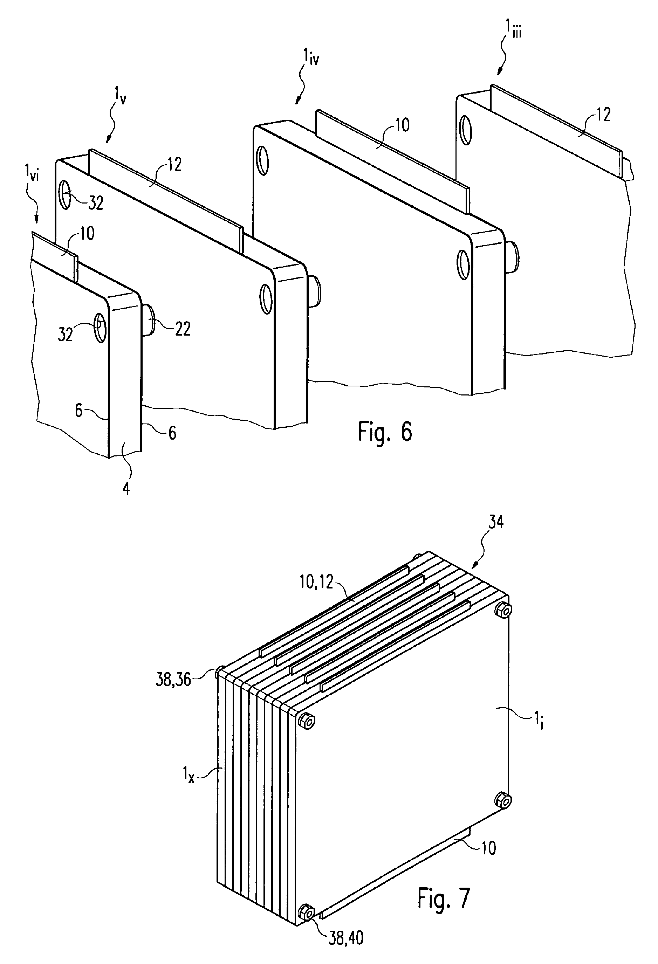

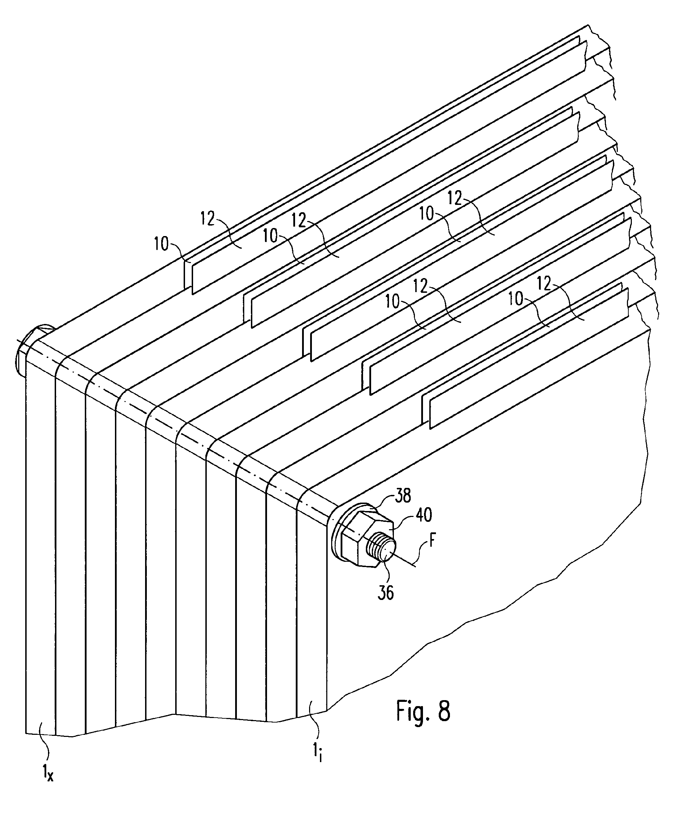

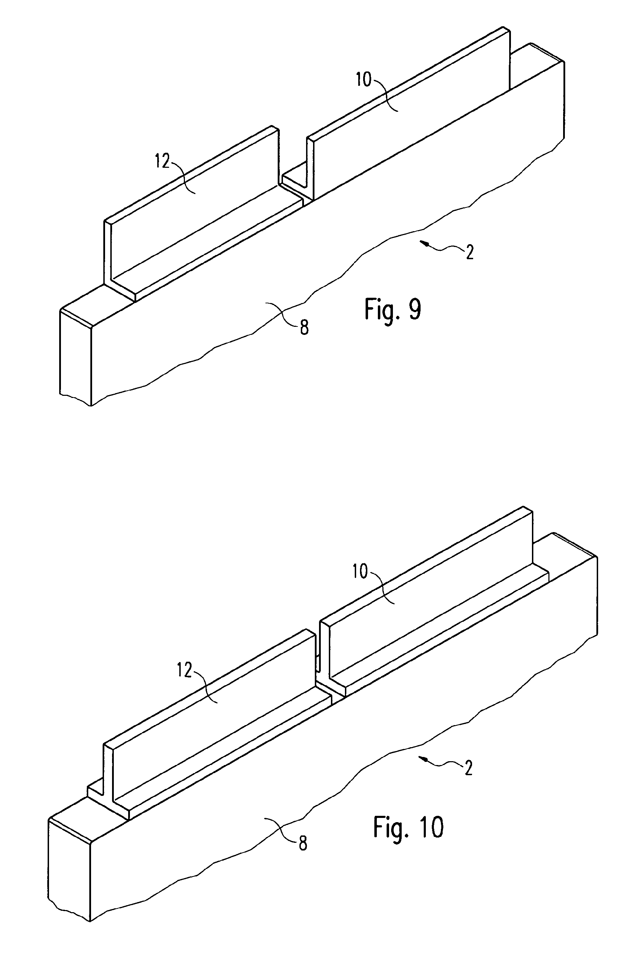

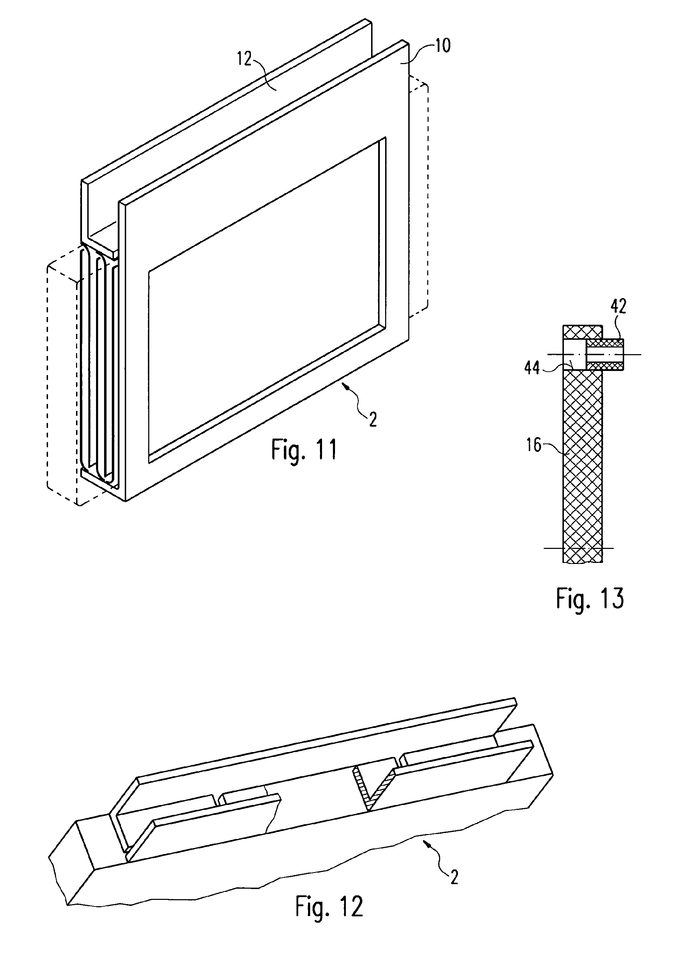

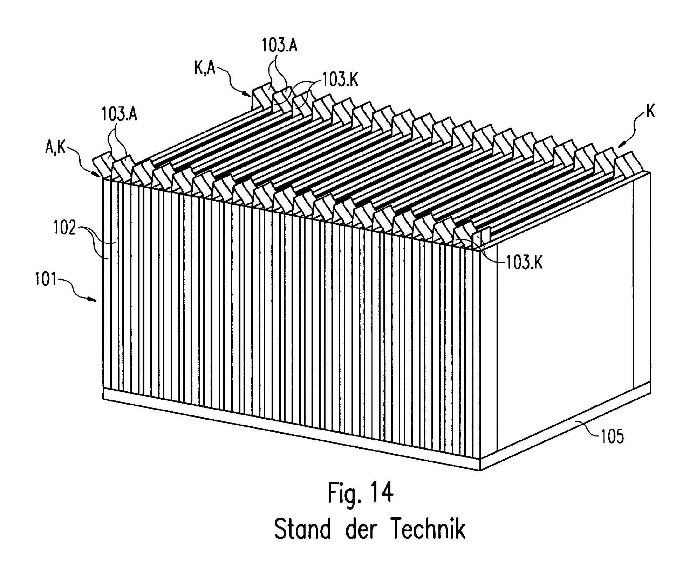

In den Zeichnungen:
ist Fig. 1 eine perspektivische Explosionsansicht von Einzelteilen bzw. Baugruppen einer galvanischen Zelle gemäß einer Ausführungsform der vorliegenden Erfindung;
zeigt Fig. 2A einen Schnitt eines Rahmenteils entlang einer Ebene II in Fig. 1;
zeigt Fig. 2B einen Schnitt eines aktiven Teils entlang der Ebene II in Fig. 1;
zeigt Fig. 3 einen Schnitt des Rahmenteils entlang einer Ebene III in Fig. 1;
ist Fig. 4 eine perspektivische Ansicht einer galvanischen Zelle gemäß einer zweiten Ausführungsform der vorliegenden Erfindung im zusammengesetzten Zustand;
ist Fig. 5 eine perspektivische Explosionsansicht von Einzelteilen bzw. Baugruppen eines Zellblocks gemäß einer dritten Ausführungsform der vorliegenden Erfindung;
ist Fig. 6 eine vergrößerte Ansicht einiger Baugruppen des Zellblocks von Fig. 5 aus einer anderen Perspektive;
ist Fig. 7 eine perspektivische Ansicht des Zellblocks von Fig. 5 im zusammengebauten Zustand;
ist Fig. 8 eine vergrößerte Ansicht einer Einzelheit VIII in Fig. 7;
zeigt Fig. 9 eine obere Schmalseite einer galvanischen Zelle gemäß einer vierten Ausführungsform der vorliegenden Erfindung in perspektivischer Ansicht;
zeigt Fig. 10 eine obere Schmalseite einer galvanischen Zelle gemäß einer fünften Ausführungsform der vorliegenden Erfindung in perspektivischer Ansicht;
ist Fig. 11 eine perspektivische Ansicht einer Elektro-Baugruppe einer galvanischen Zelle gemäß einer sechsten Ausführungsform;
zeigt Fig. 12 eine obere Schmalseite einer galvanischen Zelle gemäß einer achten Ausführungsform der vorliegenden Erfindung in perspektivischer Ansicht;
zeigt Fig. 13 einen Schnitt eines Rahmenteils in einer achten Ausführungsform der Erfindung, wobei die Darstellung einem oberen Teil der Darstellung in Fig. 3 entspricht; und
zeigt Fig. 14 einen Zellblock nach dem Stand der Technik.

Der Gegenstände einiger Abbildungen sowie die ihnen entsprechenden Passagen der Beschreibung stellen Hintergrundinformation dar.

Es ist darauf hinzuweisen, dass die Darstellungen in den Figuren schematisch sind und sich auf die Wiedergabe der für das Verständnis der Erfindung wichtigsten Merkmale beschränken. Auch ist darauf hinzuweisen, dass die in den Figuren wiedergegebenen Abmessungen und Größenverhältnisse allein der Deutlichkeit der Darstellung geschuldet sind und in keiner Weise einschränkend zu verstehen sind.

Als eine Ausführungsform der vorliegenden Erfindung wird nachstehend eine galvanische Zelle anhand der Darstellung in Figuren 1 bis 3 beschrieben. Dabei ist Fig. 1 eine perspektivische Explosionsansicht von Einzelteilen bzw. Baugruppen einer galvanischen Zelle 1, und zeigt Fig. 2a einen Schnitt eines Rahmenteils entlang einer Ebene II in Fig. 1, zeigt Fig. 2b einen Schnitt eines aktiven Teils entlang der Ebene II in Fig. 2, zeigt Fig. 3 einen Schnitt des Rahmenteils entlang einer Ebene III in Fig. 1. Die galvanische Zelle 1 ist eine Elektroenergie-Speicherzelle im Sinne der Erfindung.

Gemäß der Darstellung in Fig. 1 ist die galvanische Zelle 1 aus einer Elektro-Baugruppe 2, einem Rahmenteil 4 und zwei Deckfolien 6 zusammengesetzt, wobei die Elektro-Baugruppe ein Folienpaket 8, einen Anodenableiter 10 und einen Kathodenableiter 12 aufweist. Zur Orientierung ist in der Figur ein Achsenkreuz angegeben, dessen Ursprung willkürlich im Zentrum der vorderen Deckfolie 6 definiert ist. Eine laterale Richtung der Zelle 1 ist durch die Mittelachse in Querrichtung A definiert, eine vertikale Achse der Zelle 1 ist durch die Mittelachse in Hochrichtung B definiert, und die axiale Richtung der Zelle, die gleichzeitig die Dickenrichtung der Zelle ist, ist durch die Mittelachse in Längsrichtung C definiert. Alle Achsen sind in dünnen strichpunktierten Linien dargestellt. Die positive Richtung ist jeweils durch einen Pfeil dargestellt.

Wie in der Figur ersichtlich, weist das Folienpaket 8 eine im Wesentlichen plattenförmige Kontur auf und ist die Ausdehnung in lateraler Richtung (A) größer als die Ausdehnung in vertikaler Richtung (B). Der Anodenableiter 10 ist aus einem guten Leitermaterial hergestellt und weist einen L-förmigen Querschnitt auf. Der kurze Schenkel des L-Profils des Anodenableiters 10 ist an der oberen Schmalseite des Folienpakets 8 angebracht. Gleichermaßen ist der Kathodenableiter 12 aus einem guten Leitermaterial hergestellt und weist einen L-förmigen Querschnitt auf, und ist der kurze Schenkel des L-Profils des Kathodenableiters an der unteren Schmalseite des Folienpakets 8 angebracht. Somit erstreckt sich der lange Schenkel des Anodenableiters 10 fluchtend mit der vorderen Flachseite des Folienpakets 8 nach oben (positive Richtung B) und erstreckt sich der lange Schenkel des Kathodenableiters 12 fluchtend mit der hinteren Flachseite des Folienpakets 8 nach unten (negative Richtung B). Auf der dem Folienpaket in Dickenrichtung abgewandten Seite tragen die langen Schenkel des L-Profils des Anodenableiters und des Kathodenableiters jeweils einen Streifen einer Siegelfolie 14 zur Verbindung mit der vorderen bzw. hinteren Deckfolie 6. Es ist anzumerken, dass das Folienpaket 8 einen aktiven Teil der Zelle im Sinne der Erfindung bildet. Für die Stromableiter 10, 12 wird aus den bekannten Materialien wie Kupfer, Aluminium oder sonstige Metalle oder Legierungen davon auszuwählen sein. Zur Verbesserung des Kontakts (Verringerung des Übergangswiderstands) und/oder zur Verhinderung von Korrosion können die Stromableiter 10, 12 versilbert oder vergoldet sein.

Der Rahmenteil 4 weist zwei senkrechte Stäbe 16 und zwei waagerechte Stäbe 18 auf, die einen einstückigen Rahmen bilden. Die Innenkontur des Rahmens ist der Außenkontur des Folienpakets 8 angepasst. Der obere waagerechte Stab 18 weist eine im Querschnitt L-förmige Ausklinkung 20 auf, die dessen Dicke auf der Innenseite und auf der zu der vorderen Deckfolie 6 hin gerichteten Seite (positive Richtung C) verringert. Der untere waagerechte Stab 18 weist eine Ausklinkung 20 auf, die dessen Dicke auf der Innenseite und auf der der hinteren Deckfolie zugewandten Seite (negative Richtung C) reduziert. Die Form der Ausklinkungen 20 ist so bemessen, dass sie das L-Profil des Anodenableiters 10 und des Kathodenableiters 12 aufnimmt.

Es ist anzumerken, dass der Rahmenteil 4 ein Nahtteil im Sinne der Erfindung ist und diejenigen Abschnitte der senkrechten Stäbe 16 und der waagerechten Stäbe 18 des Rahmenteils 4, die keine Ausklinkung 20 tragen, Abschnitte größter Dicke im Sinne der Erfindung sind. Das Material des Rahmenteils 4 ist elektrisch nicht leitend und weist eine hinreichende Drucksteifigkeit auf, sodass auch unter axialem Druck (in Richtung der Achse C) die Abschnitte größter Dicke noch immer dicker als die Elektro-Baugruppe 2 sind und das Rahmenteil 4 seine Form stabil aufrechterhält. Als Materialien bieten sich verschiedene Kunststoffe, Keramiken und technische Gläser an.

Auf der vorderen Flachseite (positive Richtung C) trägt der Rahmenteil 4 in den Abschnitten größter Dicke Zentriernippel 20, die mit Zentrierlöchern 24 in den Deckfolien 6 fluchten. Zur Verdeutlichung sind in der Figur Achsen F, F' der Zentriernippel 22 und Zentrierlöcher 24 auf der linken Seite der Zelle 1 (negative Richtung A) dargestellt. In Fign. 2A und 2B sind der Rahmenteil 4 bzw. die Elektrobaugruppe 2 im Schnitt entlang einer Ebene II gezeigt, die durch die Achsen B und C aufgespannt wird (senkrechte Mittelebene in axialer Richtung). Wie gezeigt, weist der Rahmenteil 4 in seinen Abschnitten größter Dicke eine Dicke T auf, die größer ist als eine Dicke t der Elektrobaugruppe 2, insbesondere des Folienpakets 8 derselben. In Fig. 2B ist im Bereich des Folienpakets 8 der Aufbau schematisiert derart dargestellt, dass Stromsammlerfolien einer Anodenseite (Anodenleiterfolien) 26 mit dem Anodenableiter 10 verbunden sind und im Wechsel mit Stromsammlerfolien einer Kathodenseite (Kathodenleiterfolien) 28 angeordnet sind, die ihrerseits mit dem Kathodenableiter 12 verbunden sind. Dazwischen angeordnete Folien eines chemisch aktiven Materials der Anoden- und Kathodenseite sowie Separatorfolien innerhalb des Folienstapels 8 sind in der Figur zur Verdeutlichung weggelassen.

Fig. 3 zeigt einen Schnitt des Rahmenteils 4 entlang einer Ebene III in Fig. 1, die parallel zu der Ebene II liegt und durch die beiden linken Zentrierlöcher 24 und Zentriernippel 22 verläuft (siehe Achsen F, F', E in Fig. 1). Der Schnitt verläuft definitionsgemäß durch den linken senkrechten Stab 16 des Rahmenteils 4, wobei aber ein oberer und unterer Bereich willkürlich auch dem jeweiligen waagerechten Stab 18 zugeordnet sein könnte. Wie ersichtlich, verläuft fluchtend mit den Zentriernippeln 22 jeweils eine Durchgangsbohrung 30 und ist auf der den Zentriernippeln 22 gegenüberliegenden Flachseite des Rahmenteils 4 jeweils eine Einsenkung 32 vorgesehen, die so dimensioniert ist, dass sie den Zentriernippel 22 aufnehmen könnte.

Zum Zusammenbau der Zelle 1 (vgl. Fig. 1) wird die Elektrobaugruppe 2 so in den Rahmenteil 4 eingesetzt, dass die L-Profile des Anodenableiters 10 und des Kathodenableiters 12 in den Ausklinkungen 20 des Rahmenteils 4 sitzen. Es ist ersichtlich, dass zu diesem Zweck die Elektrobaugruppe 2 und das Rahmenteil 4 zunächst gegeneinander verkippt werden müssen, um etwa den Kathodenableiter 12 durch die Öffnung des Rahmenteils 4 hindurch zu befördern. Sobald die Elektrobaugruppe 2 in den Rahmenteil 14 eingesetzt ist, wird die vordere Deckfolie 6 mit den Zentrierlöchern 24 an den Zentriernippeln 22 des Rahmenteils 4 ausgerichtet auf dieses aufgesetzt und dicht verbunden, etwa durch geeignete Klebe-, Schweiß-, oder sonstige Adhäsionsverfahren. Dabei dient der Streifen Siegelfolie 14 auf dem Anodenableiter 10 der Verbindung zwischen dem Anodenableiter 10 und der Deckfolie 6. Schließlich wird die hintere Deckfolie 6 auf die hintere Flachseite des Rahmenteils 4 aufgesetzt, wobei die Zentrierlöcher 24 mit den Einsenkungen 32 fluchtend und in gleicher Weise wie die vordere Deckfolie 6 mit dem Rahmenteil 4 und dem Kathodenableiter 12 verbunden.

Fig. 4 zeigt eine perspektivische Ansicht einer galvanischen Zelle 1' gemäß einer zweiten Ausführungsform der vorliegenden Erfindung im zusammengesetzten Zustand. Die galvanische Zelle 1' der zweiten Ausführungsform ist im Aufbau mit der oben beschriebenen Zelle 1 der ersten Ausführungsform identisch mit dem Unterschied, dass sich die Stromableiter 10, 12 von den kürzeren Schmalseiten der Zelle 1' aus anstelle der längeren Schmalseiten erstrecken.

Als eine dritte Ausführungsform der vorliegenden Erfindung wird nachstehend ein Zellblock 32 anhand der Darstellung in Fign. 5 bis 8 erläutert werden. Dabei ist Fig. 5 eine perspektivische Explosionsansicht von Einzelteilen bzw. Baugruppen des Zellblocks 34, ist Fig. 6 eine vergrößerte Ansicht einiger Baugruppen des Zellblocks 34 aus einer anderen Perspektive, ist Fig. 7 eine perspektivische Ansicht des Zellblocks 34 im zusammengebauten Zustand, und ist Fig. 8 eine vergrößerte Ansicht einer Einzelheit VIII in Fig. 7.

Wie in Fig. 5 dargestellt, ist der Zellblock 34 aus zehn einzelnen galvanischen Zellen 1ᵢ bis 1ₓ der ersten Ausführungsform, vier Schrauben 36, acht Scheiben 38 und vier Muttern 40 zusammengesetzt. Dabei ist jede geradzahlige Zelle 1ᵢᵢ, 1ₓ so angeordnet, wie es der Darstellung in Fig. 1 entspricht. D.h., bei den geradzahligen Zellen 1ᵢᵢ bis 1ₓ befindet sich der Anodenableiter 10 in der Zeichnung oben und auf der dem Betrachter zugewandten Seite, während sich der Kathodenableiter 12 im Zellblock unten und auf der dem Betrachter abgewandten Seite befindet (in der Zeichnung sind die unten liegenden Kathodenableiter 12 der geradzahligen Zellen 1ᵢᵢ, ..., 1ₓ von davor liegenden Zellen verdeckt). Dagegen sind die ungeradzahligen Zellen 1ᵢ, ..., 1ᵢₓ in einer gegenüber der Darstellung in Fig. 1 um 180° um die Achse C gedrehten Orientierung angeordnet. D.h., bei diesen Zellen befindet sich der Kathodenableiter 12 im Zellblock oben und auf der vom Betrachter abgewandten Seite der Zellen, während sich der Anodenableiter 10 im Zellblock unten und auf der dem Betrachter zugewandten Seite der Zellen befindet. Auf diese Weise befindet sich jeweils ein Kathodenableiter 12 einer ungeradzahligen Zelle, z.B. der Zelle 1ᵢ, einem Anodenableiter 10 der nächsten geradzahligen Zelle, im gewählten Beispiel also der Zelle 1ᵢᵢ, in Stapelrichtung direkt benachbart gegenüber. Zwischen diesem Kathodenableiter 10 der geradzahligen Zelle 1ᵢᵢ und dem Kathodenableiter 12 der nächsten ungeradzahligen Zelle, hier also der Zelle 1ᵢᵢᵢ, ist ein Abstand von etwa der Dicke zweier Rahmenteile 4 ausgebildet. Der Kathodenableiter 12 der geradzahligen Zelle 1ᵢᵢ liegt dem Anodenableiter der nächsten ungeradzahligen Zelle, hier also der Zelle 1ᵢᵢᵢ, an der Unterseite des Zellblocks in Stapelrichtung direkt gegenüber. Wiederum ist zwischen diesem Anodenableiter 10 der ungeradzahligen Zelle 1ᵢᵢᵢ und dem Kathodenableiter 10 der nächsten geradzahligen Zelle 1ᵢᵥ ein Abstand von etwa der Dicke zweier Rahmenteile 4 ausgebildet. Dies setzt sich fort bis zu den letzten Zellen 1ᵢₓ, 1ₓ. Mit anderen Worten, in Richtung aufsteigender Ordnungszahlen der Zellen 1ᵢ, ... , 1ₓ liegen in Stapelrichtung jeweils ein Kathodenableiter 12 und ein Anodenableiter 10 einander direkt gegenüber, während zwischen diesem Anodenableiter 10 und dem nächsten Kathodenableiter 12 ein merklicher Abstand ausgebildet ist. Es ist noch darauf hinzuweisen, dass bei der ersten Zelle 1ᵢ der Anodenableiter 10 an der vorderen Stirnseite des Stapels 34 zugänglich ist, während bei der letzten Zelle 1ₓ der Kathodenableiter 12 an der hinteren Stirnseite des Zellenstapels 34 zugänglich ist.

Wie ferner ersichtlich, erstrecken sich die Schrauben 36 durch die Durchgangslöcher 30 der Rahmenteile 4 und die Durchgangslöcher 24 der Deckfolien 6 der einzelnen Zellen 1 hindurch (siehe beispielhaft die Achsen F, F' in Fig. 5) und sind über Scheiben 38 mit Muttern 40 gesichert.

Obschon die vorliegende Erfindung vorstehend unter Bezugnahme auf konkrete Ausführungsbeispiele in ihren wesentlichen Merkmalen beschrieben wurde, versteht sich, dass die Erfindung nicht auf diese Ausführungsbeispiele beschränkt ist, sondern in dem durch die Patentansprüche vorgegebenen Umfang und Bereich abgewandelt werden kann.

So sind beispielsweise die Zellen in dem Zellblock 34 der dritten Ausführungsform mittels Schrauben, Scheiben, und Muttern verspannt. Es versteht sich, dass diese Befestigungsart nur beispielhaft ist und auch etwa eine Vernietung, ggf. über geeignete Druckplatten, möglich ist. Wo eine leichte Demontage des Zellstapels 34 gewünscht ist, ist jedoch eine Verschraubung vorteilhaft, während in Anwendungsfällen, bei denen es keinesfalls zu einem Lösen der Verbindung bzw. Verspannung kommen darf, eine unlösbare Verbindung wie etwa oben beschriebenes Vernieten bevorzugt sein kann.

Die Verspannung des Zellstapels über Spannelemente, die sich durch Durchgangsbohrungen in den rahmenförmigen Siegelnähten der Zellen 1 hindurch erstrecken, ist ebenfalls nur beispielhaft zu verstehen. Eine Verspannung kann ebenso über von außen angelegte Klammern oder Manschetten erfolgen.

Auch die in Fig. 1 dargestellte Form der Rahmenteile 4 ist nur ein Beispiel. Wesentlich für die Funktionsweise der vorliegenden Erfindung ist es, dass die Siegelnaht der einer Pouch-Zelle rahmenartig ausgebildet ist, den aktiven Teil der Zelle umgibt und wenigstens an Stellen, an welchen axialer Druck auf die Zelle von außen zu erwarten ist, dicker als der aktive Teil selbst ist.

Der Aufbau und die Form der Elektro-Baugruppe 2, also des Elektrodenpakets 8 und der Ableiter 10, 12 in Fign. 1, 2B ist nur beispielhaft und kann an die Anforderungen angepasst werden. Die Ableiter 10, 12 können auch ein abweichendes Profil aufweisen, und die Anzahl der Elektroden 26, 28 ist völlig ins Belieben gestellt. Beispiele für Abwandlungen im Hinblick auf die Stromableiter 10, 12 sind in Fign. 9 bis 12 gezeigt.

So kann die Lage der Ableiter 10, 12 je nach Anforderungen variiert werden. Etwa ist es denkbar, beide Ableiter 10, 12 auf einer der Schmalseiten der Zelle unterzubringen, wie es etwa in Fig. 9 oder in Fig. 10 gezeigt ist. Dies hat den Vorteil, dass die Zellen mit der Unterseite aufgestellt werden können, ohne dass die Ableiter Schaden nehmen können. Bei einer Zelle einer vierten Ausführungsform sind gemäß der Darstellung in Fig. 9 der Anodenableiter 10 und der Kathodenableiter 12 an gegenüberliegenden Flachseiten der Zelle angeordnet, während sie bei einer Zelle einer fünften Ausführungsform gemäß der Darstellung in Fig.10 in der Mitte der oberen Schmalseite miteinander fluchten. Die Verschaltung kann dann über geeignet ausgebildete Kontaktklammern erfolgen.

Eine sechste Ausführungsform ist in Fig. 11 dargestellt. Auch dort erstrecken sich beide Ableiter 10, 12 mit ihren freien Enden entlang einer Schmalseite der Elektrobaugruppe 2, jedoch jeweils über die gesamte Breite und fluchtend mit gegenüberliegenden Flachseiten. Dabei umgreift einer der Ableiter (hier der Anodenableiter 10) den gesamten Folienstapel 8. Die Anordnung gemäß dieser Ausführungsform hat den Vorteil, dass durch wechselsinniges Anordnen der Zellen in einem Stapel eine Reihenschaltung mit direkt aneinandergrenzenden Stromableitern verwirklicht werden kann.

Auch bei einer siebenten Ausführungsform gemäß der Darstellung in Fig. 12 ist die Verschaltung wie bei der vorherigen Ausführungsform möglich, allerdings wird ein Umgreifen des Folienstapels 8 durch einen der Stromableiter 10, 12 vermieden. Bei dieser Ausführungsform sind zwei Stromableiter 10, 12 mit L-förmigem Querschnitt an der gleichen Schmalseite des Folienstapels 8 angeordnet, wobei jeweilige Teile des dem Folienstapel 8 zugewandten Schenkels der L-Profile der Ableiter 10, 12 in miteinander verzahnter Weise ausgeklinkt sind. Es ist darauf hinzuweisen, dass der Anodenableiter 10 in der Figur nur zur Verdeutlichung des Profilquerschnitts mit einem Ausbruch dargestellt ist. Tatsächlich ist auch der Anodenableiter 10 ein ununterbrochenes Profilstück.

Eine achte Ausführungsform ist in Fig. 13 gezeigt. Die Darstellung entspricht derjenigen in Fig. 3, es ist aber nur die obere Hälfte des Rahmenteils 4 dargestellt. In dieser Ausführungsform sind anstelle der Zentriernippel 22 Zentrierhülsen 42 vorgesehen, die in Bohrungen 44 eingesetzt sind. Die Zentrierhülsen 42 übernehmen dabei die Funktion der Zentriernippel 22 und der Durchgangsbohrung 30 der ersten Ausführungsform (vgl. Fig. 3), und die Bohrungen 44 übernehmen zusätzlich zur Aufnahme der Zentrierhülsen 42 die Aufgabe der Einsenkungen 32 der ersten Ausführungsform. Wo eine Verspannung der Zellen 1 über separate Durchgangsbohrungen oder gar über außenliegende Elemente erfolgt, können anstelle von Hülsen auch Zentrierstifte verwendet werden (nicht näher dargestellt).

Die vierte bis achte Ausführungsform bilden Abwandlungen der ersten oder zweiten Ausführungsform. Die Erläuterungen hinsichtlich der ersten oder zweiten Ausführungsform sind, soweit durch die Abwandlung nicht ausgeschlossen, auf die vierte bis achte Ausführungsform ausnahmslos anwendbar.

Die vorliegende Erfindung ist auf alle Arten von Speicherzellen zur Speicherung und Abgabe elektrischer Energie geeignet, insbesondere elektrochemische Primär- und Sekundärzellen beliebiger Art. Besonders bevorzugt wird die Erfindung auf Lithium-Ionen-Zellen flacher Bauart und daraus zusammengesetzte Zellblöcke anzuwenden sein.

Ein Zellblock gemäß vorstehender Beschreibung bildet, zusammen mit Anschlusspolen, die mit den freien Stromableitern 10, 12 der ersten bzw. letzten Zelle 1ᵢ, 1ₓ verbunden sind, und einem optionalen Gehäuse eine Batterie oder einen Akkumulator, der in einem Fahrzeug oder in anderen technischen Anwendungen zur Versorgung eines Bordnetzes oder für einen elektrischen Antrieb nutzbar ist. Eine solche Batterie oder Akkumulator ist eine Elektroenergie-Speichervorrichtung im Sinne der Erfindung.

### Liste der Bezugszeichen:

- 1, 1': Galvanische Zelle
- 2: Elektro-Baugruppe
- 4: Rahmenteil (Nahtteil)
- 6: Deckfolie (Folienteil)
- 8: Folienpaket (aktiver Teil)
- 10: Anodenableiter
- 12: Kathodenableiter
- 14: Siegelfolie
- 16: senkrechter Stab
- 18: waagerechter Stab
- 20: Ausklinkung
- 22: Zentriernippel
- 24: Zentrierloch
- 26: Anodenleiterfolie
- 28: Kathodenleiterfolie
- 30: Durchgangsbohrung
- 32: Einsenkung
- 34: Zellblock
- 36: Zylinderschraube
- 38: Scheibe
- 40: Mutter
- 42: Zentrierhülse
- 44: Bohrung
- 101: (Stand der Technik: Zellstapel)
- 102: (Stand der Technik: Zelle)
- 103: (Stand der Technik: Kontaktfahne)
- 105: (Stand der Technik: Grundplatte)

- A: Mittelachse in Querrichtung (Stand der Technik: Anode)
- B: Mittelachse in Hochrichtung
- C: waagerechte Mittelachse in Längsrichtung
- D, D': waagerechte Achsen in Seitenrichtung durch 24
- E: senkrechte Achse durch 24
- F, F': waagerechte Achsen in Längsrichtung durch 22, 24
- i,...,x: Index für 1
- II: Ebene B-C
- III: Ebene E-F/F'
- K: (Stand der Technik: Kathode)
- t: Dicke über alles von 2
- T: Dicke über alles von 4

## Patentansprüche

1. Elektroenergie-Speicherzelle (1, 1'), mit
einem aktiven Teil (2), der eingerichtet und angepasst ist, von außen zugeführte elektrische Energie zu speichern und gespeicherte elektrische Energie nach außen abzugeben;
wenigstens zwei Stromableitern (10, 12), die mit dem aktiven Teil verbunden sind und zur Zuführung elektrischen Stroms von außen an den aktiven Teil und zur Abgabe von dem aktiven Teil abgegebenen elektrischen Stroms nach außen eingerichtet und angepasst sind; und
einer Umhüllung, welche eine prismatische Grundform von im Wesentlichen quaderförmigem Umriss beschreibt und den aktiven Teil gas- und flüssigkeitsdicht umhüllt, wobei die Ausdehnung der prismatischen Grundform der Zelle in Dickenrichtung wesentlich kleiner als die Ausdehnung in den beiden verbleibenden Raumrichtungen ist, wobei vorzugsweise die Ausdehnung in einer der beiden verbleibenden Raumrichtungen größer als in der anderen der beiden verbleibenden Raumrichtungen ist, und wobei die Umhüllung zwei flächige Folienteile (6) und einen umlaufenden, die Ränder der Folienteile verbindenden Nahtteil (4) aufweist,
wobei der Nahtteil den aktiven Teil rahmenartig umgibt und Abschnitte größter Dicke aufweist, in welchen die Dicke auch unter mechanischem Druck gleichmäßig größer als die Dicke des aktiven Teils ist, und
wobei die zwei Folienteile wenigstens in den Abschnitten größter Dicke auf gegenüberliegenden Flachseiten des Nahtteils flächig aufliegen und mit diesen dicht verbunden sind,
**dadurch gekennzeichnet, dass**
der Nahtteil in Dickenrichtung verlaufende Durchgangsbohrungen (30) in Abschnitten größter Dicke aufweist und die Folienteile mit den Durchgangsbohrungen fluchtende Löcher aufweisen.

2. Elektroenergie-Speicherzelle nach Anspruch 1, weiter **gekennzeichnet durch** Hülsen, die sich über einen Teil der Länge der Durchgangsbohrungen in diesen erstrecken und von einer Seite des Nahtteils hervorragen, wobei vorzugsweise der Überstand der Hülsen und die in den Durchgangsbohrungen freigelassene Länge größer als die doppelte Dicke der Folien und geringer als die Hälfte der größten Dicke des Nahtteils zuzüglich der Dicke der Folien sind.

3. Elektroenergie-Speicherzelle nach Anspruch 1, **dadurch gekennzeichnet, dass** der Nahtteil in Dickenrichtung abragende Erhebungen aufweist, wobei auf der jeweils gegenüberliegenden Seite einer Erhebung eine der Erhebung in Form und Größe entsprechende und mit dieser in Dickenrichtung fluchtende Einsenkung vorgesehen ist, und die Folienteile mit den Erhebungen bzw. Einsenkungen fluchtende Löcher entsprechender Form und Ausdehnung aufweisen, wobei vorzugsweise die Höhe der Erhebungen und die Tiefe der Einsenkungen größer als die doppelte Dicke der Folien und geringer als die Hälfte der größten Dicke des Nahtteils zuzüglich der Dicke der Folien sind.

4. Elektroenergie-Speicherzelle nach Anspruch 3, **dadurch gekennzeichnet, dass** die Durchgangsbohrungen mittig fluchtend mit den Erhebungen vorgesehen sind.

5. Elektroenergie-Speicherzelle nach einem der vorstehenden Ansprüche, **dadurch gekennzeichnet, dass** die Stromableiter jeweils ein flaches Profil aufweisen und von der Umhüllung weg abragen.

6. Elektroenergie-Speicherzelle nach Anspruch 5, **dadurch gekennzeichnet, dass** die Stromableiter parallel zu den Flachseiten der von der Umhüllung definierten prismatischen Grundform abragen.

7. Elektroenergie-Speicherzelle nach Anspruch 6, **dadurch gekennzeichnet, dass** die Stromableiter sich an gegenüberliegende Flachseiten der von der Umhüllung definierten prismatischen Grundform angrenzend erstrecken.

8. Elektroenergie-Speicherzelle nach einem der Ansprüche 5 bis 7, **dadurch gekennzeichnet, dass** die Stromableiter von gegenüber liegenden Schmalseiten der von der Umhüllung definierten prismatischen Grundform abragen.

9. Elektroenergie-Speicherzelle nach einem der Ansprüche 5 bis 8, **dadurch gekennzeichnet, dass** die Stromableiter sich jeweils zwischen dem Nahtteil und einer der Folien hindurch erstrecken und mit diesen dicht verbunden sind.

10. Elektroenergie-Speicherzelle nach Anspruch 9, **dadurch gekennzeichnet, dass** der Nahtteil der Form und Größe der Stromableiter angepasste Ausklinkungen aufweist.

11. Elektroenergie-Speicherzelle nach einem der vorstehenden Ansprüche, **dadurch gekennzeichnet, dass** der aktive Teil evakuiert ist.

12. Zellblock, bestehend aus einer Mehrzahl von Elektroenergie-Speicherzellen nach einem der vorstehenden Ansprüche, wobei die Zellen in Richtung ihrer Dicke gestapelt sind und vorzugsweise wenigstens in Bereichen, die den Abschnitten größter Dicke des Nahtteils entsprechen, aufeinander aufliegen.

13. Zellblock nach Anspruch 12, **dadurch gekennzeichnet, dass** die Zellen in Stapelrichtung auf Druck miteinander verspannt sind, wobei die Verspannung der Zellen mittels Zugstäben erfolgt, die sich durch die Durchgangslöcher aller Zellen hindurch erstrecken.

14. Elektroenergie-Speichervorrichtung, enthaltend einen Zellblock nach Anspruch 12 oder 13 sowie einem ersten Pol, der mit einem freien Stromableiter der ersten Elektroenergie-Speicherzellen verbunden ist, und einem zweiten Pol, der mit einem freien Stromableiter der letzten der Elektroenergie-Speicherzellen verbunden ist.

15. Fahrzeug mit einer Elektroenergie-Speichervorrichtung nach Anspruch 14.

## Claims

1. Electric energy storage cell (1, 1'), comprising
an active part (2), which is equipped and adapted to store externally supplied electric energy and to deliver stored electric energy to the outside;
at least two current arresters (10, 12), which are connected to the active part and which are equipped and adapted to supply electric current from outside to the active part and to deliver electric current provided by the active part to the outside; and
a covering, which defines a prismatic basic shape with a substantially rectangular contour and encases the active part in a gas- and liquid-tight manner, wherein the dimension of the prismatic basic shape of the cell in the thickness direction is substantially smaller than its dimension in the two remaining directions in space, wherein the dimension in one of the two remaining directions in space is larger than in the other of the two remaining directions in space, and wherein the covering comprises two flat sheet parts (6) and a continuous seam part (4) connecting the edges of the sheet parts,
wherein the seam part surrounds the active part in the manner of a frame and has sections of maximum thickness in which the thickness is uniformly greater than the thickness of the active part even under mechanical pressure, and
wherein the two sheet parts lie flat on opposite flat sides of the seam part at least in the sections of maximum thickness and are tightly joined thereto,
**characterised in that**
the seam part has through-holes (30) extending in the thickness direction in sections of maximum thickness, and **in that** the sheet parts have holes in alignment with the through-holes.

2. Electric energy storage cell according to claim 1, further **characterised by** sleeves which extend in the through-holes along a part of their length and project from one side of the seam part, wherein the projection of the sleeves and the free length in the through-holes are preferably greater than twice the thickness of the sheets and less than half the maximum thickness of the seam part plus the thickness of the sheets.

3. Electric energy storage cell according to claim 1, **characterised in that** the sheet part has raised areas projecting in the thickness direction, wherein opposite each raised area there is provided an indentation matching the raised area in shape and size and being in alignment therewith in the thickness direction, and **in that** the sheet parts have holes of a corresponding shape and dimension, which are in alignment with the raised areas and indentations respectively, the height of the raised areas and the depth of the indentations being preferably greater than twice the thickness of the sheets and less than half the maximum thickness of the seam part plus the thickness of the sheets.

4. Electric energy storage cell according to claim 3, **characterised in that** the through-holes are centrally aligned to the raised areas.

5. Electric energy storage cell according to any of the preceding claims, **characterised in that** each of the current arresters has a flat profile and projects away from the covering.

6. Electric energy storage cell according to claim 5, **characterised in that** the current arresters project parallel to the flat sides of the prismatic basic shape defined by the covering.

7. Electric energy storage cell according to claim 6, **characterised in that** the current arresters extend in such a way that they adjoin opposite flat sides of the prismatic basic shape defined by the covering.

8. Electric energy storage cell according to any of claims 5 to 7, **characterised in that** the current arresters project from opposite narrow sides of the prismatic basic shape defined by the covering.

9. Electric energy storage cell according to any of claims 5 to 8, **characterised in that** each of the current arresters extends between the seam part and one of the sheets and is tightly connected thereto.

10. Electric energy storage cell according to claim 9, **characterised in that** the seam part has notches matching the shape and size of the current arresters.

11. Electric energy storage cell according to any of the preceding claims, **characterised in that** the active part is evacuated.

12. Cell block, comprising a plurality of electric energy storage cells according to any of the preceding claims, wherein the cells are stacked in the direction of their thickness and preferably lie on one another at least in regions which correspond to the sections of maximum thickness of the seam part.

13. Cell block according to claim 12, **characterised in that** the cells are clamped to one another by pressure in the stacking direction, wherein the cells are clamped by means of tie rods extending through the through-holes of all cells.

14. Electric energy storage device, comprising a cell block according to claim 12 or 13 and a first terminal connected to a free current arrester of the first of the electric energy storage cells and a second terminal connected to a free current arrester of the last of the electric energy storage cells.

15. Vehicle equipped with an electric energy storage device according to claim 14.

## Revendications

1. Accumulateur d'énergie électrique (1, 1'), doté d'un élément actif (2), qui est conçu et approprié pour stocker l'énergie électrique amenée à partir de l'extérieur et pour délivrer vers l'extérieur l'énergie électrique stockée ; d'au moins deux dérivateurs de courant (10, 12), qui sont reliés à l'élément actif et qui sont conçus et appropriés pour amener le courant électrique à partir de l'extérieur à l'élément actif et pour délivrer le courant électrique délivré par l'élément actif vers l'extérieur ; et d'une enveloppe, qui décrit une forme de base prismatique de contour sensiblement parallélépipède droit et qui enveloppe de manière étanche au liquide et au gaz l'élément actif, la dilatation de la forme de base prismatique de l'accumulateur en direction de l'épaisseur étant sensiblement inférieure à la dilatation dans les deux autres orientations dans l'espace, de préférence la dilatation dans l'une des deux autres orientations dans l'espace étant supérieure à celle dans l'autre des autres orientations dans l'espace, et l'enveloppe présentant deux parties de feuille (6) plates et une partie de jonction (4) périphérique reliant les bords des parties de feuille, la partie de jonction entourant la périphérie de l'élément actif et présentant des sections d'épaisseur supérieure, dans lesquelles l'épaisseur uniforme est supérieure même sous pression mécanique à l'épaisseur de l'élément actif, et les deux parties de feuille au moins dans les sections d'épaisseur supérieure étant disposées à plat sur des faces plates en regard de la partie de jonction et y étant reliées de manière étanche, **caractérisé en ce que** la partie de jonction présente des trous traversant (30) s'étendant dans la direction d'épaisseur dans des sections d'épaisseur supérieure et les parties de feuille présentent des orifices alignés sur les trous traversant.

2. Accumulateur d'énergie électrique selon la revendication 1, en outre **caractérisé par** des manchons, qui s'étendent dans les trous traversant sur une partie de leur longueur et qui dépassent d'un côté de la partie de jonction, de préférence la partie en saillie des manchons et la longueur libre dans les trous traversant étant supérieure à la double épaisseur des feuilles et inférieure à la moitié de la plus grande épaisseur de la partie de jonction en plus de l'épaisseur des feuilles.

3. Accumulateur d'énergie électrique selon la revendication 4, **caractérisé en ce que** la partie de jonction présente des parties saillantes dépassant dans la direction d'épaisseur, sur chaque face en regard d'une partie saillante étant disposé un évidement correspondant à la forme et à la taille de la partie saillante et en alignement avec celle-ci dans la direction d'épaisseur, et les parties de feuille présentant des trous en alignement avec des évidements ou les parties saillantes de forme et de dilatation correspondantes, de préférence la hauteur des parties saillantes et la profondeur des évidements étant supérieures à la double épaisseur des feuilles et inférieures à la moitié de la plus grande épaisseur de la partie de jonction en plus de l'épaisseur des feuilles.

4. Accumulateur d'énergie électrique selon la revendication 3, **caractérisé en ce que** les trous traversant sont disposés au centre en alignement avec les parties saillantes.

5. Accumulateur d'énergie électrique selon l'une quelconque des revendications précédentes, **caractérisé en ce que** les dérivateurs de courant présentent chacun un profilé plat et dépassent de l'enveloppe.

6. Accumulateur d'énergie électrique selon la revendication 5, **caractérisé en ce que** les dérivateurs de courant parallèles aux faces plates dépassent la forme de base prismatique définie par l'enveloppe.

7. Accumulateur d'énergie électrique selon la revendication 6, **caractérisé en ce que** les dérivateurs de courant s'étendent à proximité des faces plates opposées de la forme de base prismatique définie par l'enveloppe.

8. Accumulateur d'énergie électrique selon l'une quelconque des revendications 5 à 7, **caractérisé en ce que** les dérivateurs de courant dépassent des faces étroites opposées de la forme de base prismatique définie par l'enveloppe.

9. Accumulateur d'énergie électrique selon l'une quelconque des revendications 5 à 8, **caractérisé en ce que** les dérivateurs de courant s'étendant chacun entre la partie de jonction et l'une des feuilles et sont y sont reliées de manière étanche.

10. Accumulateur d'énergie électrique selon la revendication 9, **caractérisé en ce que** la partie de jonction de la forme et de la taille des dérivateurs de courant présente des entailles adaptées.

11. Accumulateur d'énergie électrique selon l'une quelconque des revendications précédentes, **caractérisé en ce que** l'air est évacué de l'élément actif.

12. Bloc d'éléments comprenant une pluralité d'accumulateurs d'énergie électrique selon l'une quelconque des revendications précédentes, les éléments étant empilés dans la direction de leur épaisseur et reposent les unes sur les autres de préférence au moins dans des zones, qui correspondant aux sections de la plus grande épaisseur de la partie de jonction.

13. Bloc d'éléments selon la revendication 12, **caractérisé en ce que** les éléments dans la direction d'empilement sont haubanés conjointement par pression, l'haubanage des éléments s'effectuant à l'aide de barres de traction qui s'étendent à travers les trous traversant de tous les éléments.

14. Dispositif d'accumulation d'énergie électrique, comprenant un bloc d'éléments selon la revendication 12 ou la revendication 13 ainsi qu'un premier pôle qui est relié à un dérivateur de courant libre des premiers accumulateurs d'énergie électrique et un second pôle qui est relié à un dérivateur de courant libre du dernier des accumulateurs d'énergie électrique.

15. Véhicule automobile doté d'un dispositif d'accumulation d'énergie électrique selon la revendication 14.
